(19) Europäisches Patentamt European Patent Office Office européen des brevets

(11) **EP 4 679 916 A1**

(12) **EUROPEAN PATENT APPLICATION**
published in accordance with Art. 153(4) EPC

(43) Date of publication:
**14.01.2026 Bulletin 2026/03**

(21) Application number: 23926687.7

(22) Date of filing: **10.03.2023**

(51) International Patent Classification (IPC):
**H04W 72/12** (2023.01)

(52) Cooperative Patent Classification (CPC):
**H04L 25/03; H04W 72/12; H04W 72/1268**

(86) International application number:
**PCT/CN2023/080949**

(87) International publication number:
**WO 2024/187328 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GAO, Xueyuan
Beijing 100085 (CN)**

(74) Representative: **Dehns Germany Partnerschaft
mbB
Theresienstraße 6-8
80333 München (DE)**

(54) **COMMUNICATION METHOD AND APPARATUS, AND STORAGE MEDIUM**

(57) The present disclosure relates to a communication method and apparatus, and a storage medium. The method comprises : using different scrambling sequences to scramble multiple code words, the multiple code words corresponding to multiple physical uplink shared channels (PUSCHs). The multiple PUSCHs are respectively associated with different antenna panels and/or transmission and reception points (TRPs), and the multiple PUSCHs are respectively scheduled by multiple downlink control information (MDCI) and support MDCI-based simultaneous transmission from multiple panels. By using the communication method of the present disclosure, the transmission interference among code words corresponding to different PUSCHs during uplink transmission can be reduced, the uplink transmission performance can be optimized, and the transmission quality can be improved.

S11

Scrambling multiple codewords corresponding to multiple physical uplink shared channels (PUSCHs) by employing different scrambling sequences

FIG. 4

EP 4 679 916 A1

## Description

**TECHNICAL FIELD**

The present disclosure relates to the field of communication technologies, and in particular to a communication method, a device, and a storage medium.

**BACKGROUND**

In simultaneous transmission from multiple panels (STxMP) on the Physical Uplink Shared Channel (PUSCH) based on multiple downlink control information (MDCI) scheduling, the time domain resources of respective PUSCHs can fully or partially overlap in terms of time domain resource allocation. This can cause interference when different PUSCHs are transmitted simultaneously through different panels. Therefore, scrambling the codewords corresponding to the PUSCHs is necessary to reduce transmission interference and improve transmission quality.

**SUMMARY**

To overcome the problems existing in the related art, the present disclosure provides a communication method, a device and a storage medium.

According to a first aspect of the embodiments of the present disclosure, there is provided a communication method, performed by a terminal, including:

    scrambling multiple codewords by employing different scrambling sequences, where the multiple codewords correspond to multiple physical uplink shared channels PUSCHs;
    where the multiple PUSCHs are associated with different antenna panels and/or transmission reception points TRPs respectively, and are scheduled by multiple downlink control information MDCI respectively, supporting simultaneous transmission of multiple panels based on MDCI.

According to a second aspect of the embodiments of the present disclosure, there is provided a communication method, performed by a network device, including:

    receiving multiple physical uplink shared channels PUSCHs, where the multiple PUSCHs correspond to multiple codewords, and
    the multiple codewords are scrambled by employing different scrambling sequences respectively;
    the multiple PUSCHs are associated with different antenna panels and/or transmission reception points TRPs, and the multiple PUSCHs are scheduled by multiple downlink control information MDCI respectively, supporting simultaneous transmission of multiple panels based on MDCI.

According to a third aspect of the embodiments of the present disclosure, there is provided a communication device, including:

    a processing module configured to scramble multiple codewords by employing different scrambling sequences, where the multiple codewords correspond to multiple physical uplink shared channels PUSCHs;
    where the multiple PUSCHs are associated with different antenna panels and/or transmission reception points TRPs respectively, and are scheduled by multiple downlink control information MDCI respectively, supporting simultaneous transmission of multiple panels based on MDCI.

According to a fourth aspect of the embodiments of the present disclosure, there is provided a communication device, including:

    a communication module configured to receive multiple physical uplink shared channels PUSCHs, where the multiple PUSCHs correspond to multiple codewords, and the multiple codewords are scrambled by employing different scrambling sequences;
    the multiple PUSCHs are associated with different antenna panels and/or transmission reception points TRPs respectively, and are scheduled by multiple downlink control information MDCI respectively, supporting simultaneous transmission of multiple panels based on MDCI.

According to a fifth aspect of the embodiments of the present disclosure, there is provided a communication device, including:

    a processor;
    a memory for storing processor-executable instructions;
    where the processor is configured to perform the method according to the first aspect or any embodiment in the first aspect.

According to a sixth aspect of the embodiments of the present disclosure, there is provided a communication device, including:

    a processor;
    a memory for storing processor-executable instructions;
    where the processor is configured to perform the method according to the second aspect or any embodiment in the second aspect.

According to a seventh aspect of the embodiments of the present disclosure, there is provided a storage medium, where instructions are stored in the storage medium, and when the instructions in the storage medium are executed by a processor of a terminal, the terminal is enabled to perform the method according to the first aspect or any embodiment in the first aspect.

According to an eighth aspect of the embodiments of the present disclosure, there is provided a storage medium, where instructions are stored in the storage medium, and when the instructions in the storage medium are executed by a processor of a network device, the network device is enabled to perform the method according to the second aspect or any embodiment in the second aspect.

The technical solutions provided by the embodiments of the present disclosure can achieve the following beneficial effects: by employing different scrambling sequences to scramble multiple codewords corresponding to multiple PUSCHs transmitted simultaneously via different panels, and conducting PUSCH-based communication based on the scrambled codewords, transmission interference between codewords corresponding to different PUSCHs during uplink transmission is reduced, thereby optimizing uplink transmission performance and improving transmission quality.

It should be understood that the above general description and the detailed descriptions that follow are merely exemplary and illustrative and do not limit the present disclosure.

## BRIEF DESCRIPTION OF THE DRAWINGS

The accompanying drawings, which are incorporated herein and constitute a part of this description, illustrate embodiments consistent with the present disclosure and, together with the description, serve to explain the principles of the present disclosure.

FIG. 1 is a schematic diagram of a wireless communication system according to an example embodiment.

FIG. 2 is a schematic diagram of an M-TRP transmission method under SDCI scheduling according to an example embodiment.

FIG. 3 is a schematic diagram of an M-TRP transmission method under MDCI scheduling according to an example embodiment.

FIG. 4 is a flowchart of a communication method according to an example embodiment.

FIG. 5 is a flowchart of a method for scrambling multiple codewords by employing different scrambling sequences according to an example embodiment.

FIG. 6 is a flowchart of a communication method according to an example embodiment.

FIG. 7 is a flowchart of a communication method according to an example embodiment.

FIG. 8 is a flowchart of a communication method according to an example embodiment.

FIG. 9 is a flowchart of a communication method according to an example embodiment.

FIG. 10 is a flowchart of a communication method according to an example embodiment.

FIG. 11 is a block diagram of a communication device according to an example embodiment.

FIG. 12 is a block diagram of a communication device according to an example embodiment.

FIG. 13 is a block diagram of a device for communication according to an example embodiment.

FIG. 14 is a block diagram of a device for communication according to an example embodiment.

## DETAILED DESCRIPTION

The example embodiments will be described in detail herein, with examples illustrated in the accompanying drawings. When the following description refers to the drawings, unless otherwise indicated, identical numerals in different drawings represent identical or similar elements. The embodiments described in the following example embodiments do not represent all embodiments consistent with the present disclosure.

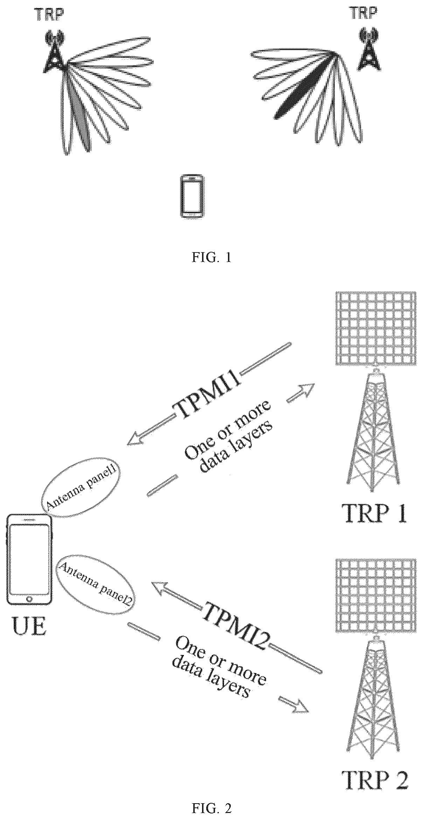

The communication method of the embodiments of the present disclosure can be applied to a wireless communication system shown in FIG. 1. Referring to FIG. 1, the wireless communication system includes network devices and a terminal. The terminal connects to the network devices via wireless resources and performs data transmission.

It should be understood that the wireless communication system shown in FIG. 1 is merely illustrative. The wireless communication system may also include other network devices, such as a core network device, a wireless relay device, and a wireless backhaul device, etc., which are not shown in FIG. 1. The embodiments of the present disclosure do not limit the number of network devices or terminals included in the wireless communication system.

It should be further understood that the wireless communication system of the embodiments of the present disclosure is a network that provides wireless communication capabilities. The wireless communication system can employ various communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance (CSMA/CA). Based on factors such as capacity, speed, and latency of different networks, the networks can be categorized as 2G (generation), 3G, 4G, or future evolution networks, such as 5G. 5G networks are also referred to as New Radio (NR). For ease of description, the present disclosure will sometimes refer to a wireless communication network simply as a network.

Furthermore, the network device referred to in the present disclosure may also be referred to as a radio access network device or a core network device. The radio access network device may be a base station, an evolved base station (evolved node B, base station), a home base station, an access point (AP) in a wireless fidelity (Wi-Fi) system, a wireless relay node, a wireless backhaul node, a transmission point (TP), or a TRP. It may also be a gNB in an NR system, or a component or a part of devices constituting a base station. It should be understood that the embodiments of the present disclosure do not limit the specific technology and device form employed by the network device. In the present disclosure, the network device may provide communication coverage for a specific geographic area and communicate with terminals within that coverage area (cell). Furthermore, in the case of a vehicle-to-everything (V2X) communication system, the network device may also be a vehicle-mounted device.

Furthermore, the terminal involved in the present disclosure may also be referred to as a terminal device, a user equipment (UE), a mobile station (MS), or a mobile terminal (MT), etc., and is a device that provides voice and/or data connectivity to users. For example, the terminal may be a handheld device with wireless connectivity or a vehicle-mounted device, etc. Currently, some examples of terminals include smartphones, customer premises equipment (CPE), pocket personal computers (PPCs), handheld computers, personal digital assistants (PDAs), laptops, tablets, wearable devices, and vehicle-mounted devices, etc. Furthermore, in the case of a vehicle-to-everything (V2X) communication system, the terminal device may also be a vehicle-mounted device. It should be understood that the embodiments of the present disclosure do not limit the specific technology or device form employed by the terminal.

To improve cell edge coverage and provide more balanced service quality within the service area, coordinated multi-point (CoMP) technology can be employed. In NR systems, CoMP is an important technical means of improving cell edge coverage and providing more balanced service quality within the service area. From a network architecture perspective, CoMP deploys networks using a combination of numerous distributed access points and centralized baseband processing, which is more conducive to providing balanced user experience rates and significantly reduces the latency and signaling overhead associated with handover. As frequency bands increase, a relatively dense deployment of access points is also required to ensure network coverage. In high-frequency bands, as active antenna device becomes more integrated, modular active antenna arrays are increasingly preferred. Each TRP's antenna array can be divided into several relatively independent panels, allowing the configuration and port count of the overall array to be flexibly adjusted based on deployment scenarios and service requirements. Panels or TRPs can also be connected by optical fiber, enabling more flexible distributed deployment. In the millimeter wave band, as wavelengths decrease, the obstruction effect caused by obstacles such as people or vehicles becomes more significant. In this case, from the perspective of ensuring robust link connectivity, collaboration between multiple TRPs or panels can be leveraged, using multiple beams at multiple angles for transmission/reception, thereby mitigating the adverse effects of obstruction.

Based on the mapping relationship between transmitted signal streams and multiple TRPs/panels, coordinated multi-point transmission technology can be categorized as coherent and incoherent transmissions. In coherent transmission, each data stream is mapped to multiple TRPs/panels using a weighted vector. In incoherent transmission, each data stream is mapped to only a portion of TRPs/panels. Coherent transmission places higher demands on synchronization between transmission points and the transmission capacity of the backhaul link, making it more sensitive to many non-ideal factors in real-world deployment conditions. In contrast, incoherent transmission is less affected by these factors and is therefore a key consideration for multi-point transmission technology. Uplink PUSCH transmissions are transmitted toward TRPs of multiple base stations. In some embodiments of the present disclosure, multi-point coordinated transmission can be implemented under time division multiplexing (TDM) transmission mode. For example, different repetitions of the same information on PUSCH are sent to different TRPs of the base station using different transmission occasions (TOs) in the time domain. This method places relatively low demands on terminal capabilities, does not require support for simultaneous beam transmission, and suffers from significant transmission latency.

The multi-antenna precoding of PUSCH supports two different mode configurations: codebook-based transmission and non-codebook-based transmission. The choice of mode is generally determined based on whether reciprocity between the uplink and downlink channels is established. Regardless of the precoding mode, the terminal is required to transmit a Sounding Reference Signal (SRS) for the base station to estimate uplink Channel State Information (CSI).

For the uplink, the actual channel characteristics may vary significantly across different TRPs for PUSCH channels. Therefore, it is assumed that the Quasi Co-Location-D (QCL-D) values for PUSCH channels differ depending on the transmission direction.

In some embodiments of the present disclosure, only uplink transmission enhancement for multiple transmission reception points (M-TRPs) under single-downlink control information (S-DCI) is considered. Uplink PUSCH transmissions are transmitted toward TRPs of multiple base stations. Furthermore, it is desirable to implement simultaneous coordinated transmissions from multiple terminal panels to the TRPs of multiple base stations to improve transmission reliability and throughput, while effectively reducing transmission latency under multiple TRPs. However, this requires the terminal to be capable of transmitting multiple beams simultaneously. PUSCH transmission can be based on multiple-panel/TRP transmission scheduled by a single physical downlink control channel (PDCCH), i.e., S-DCI, as shown in FIG. 2. The UE communicates with TPR1 of the base station via antenna panel 1. For example, the UE receives a first precoding indicator information (Transmit Precoding Matrix Indicator, TPMI) TPMI1 sent by TPR1 and sends one or more data layers to TRP1. The UE also communicates with TPR2 of the base station via antenna panel 2. For example, the UE receives a second precoding indicator information TPMI2 sent by TPR2 and sends one or more data layers to TRP2.

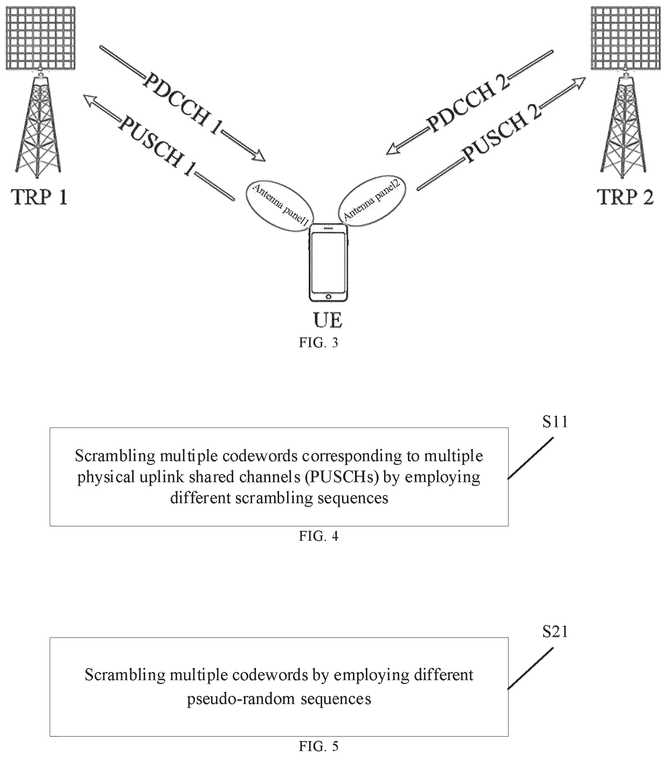

PUSCH transmission can also be based on multiple-panel/TRP transmission scheduled by different PDCCHs, i.e., MDCI, as shown in FIG. 3. The UE communicates with TPR1 of the base station via antenna panel 1. For example, the UE receives PDCCH1 sent by TRP1 and sends PUSCH1 to TRP1. The UE also communicates with TPR2 of the base station via antenna panel 2. For example, the UE receives PDCCH2 sent by TRP2 and sends PUSCH2 to TRP2.

In actual deployments, the links between transmission points may be relatively ideal backhaul links supporting high throughput and very low backhaul latency, or they may be non-ideal backhaul links using methods such as x Digital Subscriber Line (xDSL), microwave, and relay. The MDCI-based non-coherent joint transmission (NC-JT) transmission scheme was initially introduced primarily for non-ideal backhaul scenarios, but it can also be used for ideal backhaul scenarios.

The terminal typically has multiple physical panels, and different panels may have different capabilities. For example, the different panels may have different numbers of sounding reference signal (SRS) ports and the maximum number of data transmission layers supported may also differ. For example, one panel may support up to two layers of transmission, while another may support up to four layers. The network scheduler determines whether the terminal is currently suitable for simultaneous uplink transmission on multiple panels. If the terminal is currently suitable for simultaneous uplink transmission on multiple panels scheduled simultaneously, the network will directly or indirectly indicate relevant transmission parameters, including terminal-specific beam indication information, the number of data layers used for transmission, the allocation of demodulation reference signal (DMRS) ports, and precoding indication information, etc.

In some embodiments of the present disclosure, the transmission schemes supported by STxMP for S-DCI-based PUSCH include space division multiplexing (SDM) scheme and single frequency network (SFN) scheme. The SDM scheme involves transmitting different portions of a PUSCH transport block (TB) on the same time-frequency resources to two different TRPs via corresponding DMRS ports or port combinations allocated on different panels. Different panels/TRPs/TOs are associated with different transmission configuration indicator (TCI) states, i.e., beams. The SFN scheme involves transmitting a PUSCH transmission block (TB) on the same time-frequency resources to two different TRPs via the same DMRS port or port combination allocated on different panels. Different panels/TRPs/TOs are associated with different TCI states, i.e., beams.

In some embodiments of the present disclosure, uplink simultaneous transmission via multiple panels or multiple TRPs can be enhanced to support higher uplink throughput and more reliable transmission performance. In single-TRP transmission, uplink PUSCH transmission supports up to four layers and supports one codeword transmission. The codeword can be scrambled by the Cell Radio Network Temporary Identifier (C-RNTI). For example, the random sequence initialization value of the pseudo-random sequence configured to scramble the codeword can be determined using the formula $C_{init} = N_{RNTI} * 2^{15} + N_{ID}$, where $C_{init}$ is the random sequence initialization value, $N_{RNTI}$ is the radio network identifier corresponding to the terminal, and $N_{ID}$ is the cell identifier of the cell in which the terminal resides. The $N_{ID}$ is configured by the network using the PUSCH data scrambling identity parameter dataScramblingIdentityPUSCH. It should be understood that the codewords in some embodiments herein may be codewords in the standard. A codeword can be independently scrambled and modulated, and thus can correspond to one or more layers of data streams.

In PUSCH uplink STxMP transmission based on MDCI scheduling, the time domain resources of respective PUSCHs may fully or partially overlap in terms of time domain resource allocation. This can cause interference when different PUSCHs are transmitted simultaneously through different panels. Therefore, it is necessary to scramble the codewords corresponding to the PUSCHs to reduce transmission interference and improve transmission quality.

In view of this, embodiments of the present disclosure provide a communication method that scrambles multiple codewords correspond to multiple PUSCHs transmitted simultaneously through different panels by employing different scrambling sequences. This reduces transmission interference between codewords corresponding to different PUSCHs during uplink transmission, optimizes uplink transmission performance, and improves transmission quality.

FIG. 4 is a flowchart illustrating a communication method according to an example embodiment. As shown in FIG. 4, the method is performed by a terminal and includes the following steps.

In step S11, scrambling multiple codewords corresponding to multiple physical uplink shared channels (PUSCHs) by employing different scrambling sequences.

The multiple PUSCHs are associated with different panels and/or TRPs, and the multiple PUSCHs are scheduled by MDCI and support MDCI-based STxMP.

The communication method provided in the embodiments of the present disclosure can be used to enhance scrambling for PUSCH STxMP based on MDCI. That is, in the embodiments of the present disclosure, the terminal can be scheduled by MDCI and support STxMP. Furthermore, in PUSCH uplink STxMP transmission scheduled by MDCI, the time domain resources of multiple PUSCHs may fully or partially overlap, which may cause interference when different PUSCHs are transmitted simultaneously through different panels.

In the embodiments of the present disclosure, by scrambling the multiple codewords corresponding to the multiple PUSCHs by employing different scrambling sequences, interference can be reduced when multiple PUSCHs with fully or partially overlapping time domain resources are transmitted simultaneously through different panels.

In the embodiments of the present disclosure, multiple PUSCHs are associated with different panels and/or TRPs. In other words, multiple codewords corresponding to multiple PUSCHs associated with different panels and/or TRPs can be scrambled using different scrambling sequences, for example, different bit-level scrambling. PUSCH-based communication can then be conducted based on these scrambled codewords, thereby reducing transmission interference between codewords corresponding to different PUSCHs during uplink transmission.

The technical solutions of the embodiments of the present disclosure employ different scrambling sequences to scramble multiple codewords corresponding to multiple PUSCHs transmitted simultaneously via different panels. This reduces transmission interference between codewords corresponding to different PUSCHs during uplink transmission, optimizes uplink transmission performance, and improves transmission quality.

In the embodiments of the present disclosure, multiple PUSCHs corresponding to codewords scrambled using different scrambling sequences can also be transmitted. Transmitting a PUSCH as referred to in the present disclosure can be understood as transmitting corresponding data on corresponding time and frequency domain resources, and the data path formed by transmitting the data is the aforementioned PUSCH.

In the embodiment of the present disclosure, multiple PUSCHs being associated with different panels and/or TRPs may include at least one of the following:

> multiple PUSCHs being associated with different transmission configuration indication states (TCI states);
> multiple PUSCHs being associated with different control resource pool indices (CORSERPoolIndex);
> multiple PUSCHs being associated with different sounding reference signal resource sets (SRS source sets).

FIG. 5 is a flowchart illustrating a method for scrambling multiple codewords by employing different scrambling sequences according to an example embodiment. As shown in FIG. 5, the method includes the following steps.

In step S21, scrambling multiple codewords by employing different pseudo-random sequences.

The different pseudo-random sequences are determined based on different random sequence initialization values.

In the embodiment of the present disclosure, the terminal may use different pseudo-random sequences to scramble the multiple codewords. The different pseudo-random sequences are determined based on different random sequence initialization values.

In one embodiment, the pseudo-random sequence may be configured to scramble the codewords. For example, the original signal may be multiplied by the pseudo-random sequence to generate a new signal to complete the scrambling. The pseudo-random sequence is generated based on the pseudo-random sequences. The terminal can generate multiple different pseudo-random sequences, obtain a pseudo-random sequence from the pseudo-random sequences, and use the pseudo-random sequence to scramble the codeword.

In one embodiment, the different pseudo-random sequences can be determined based on different random sequence initialization values. The random sequence initialization values can be generated using different longest linear feedback shift register sequences, such as an m-sequence, and the pseudo-random sequences are determined based on the random sequence initialization values.

In the embodiment of the present disclosure, multiple different pseudo-random sequences are determined based on the multiple different random sequence initialization values, and the multiple codewords are scrambled using the multiple different pseudo-random sequences, thereby avoiding transmission interference between multiple PUSCHs corresponding to the multiple codewords on the same time domain resources.

In the embodiment of the present disclosure, the random sequence initialization value can be determined based on identification information, with different random sequence initialization values corresponding to different identification information. Furthermore, the identification information can include terminal identification information, or the identification information can include terminal identification information and codeword identification information. Furthermore, the terminal identification information includes the wireless network temporary identification corresponding to the terminal and the cell identification of the cell in which the terminal resides.

In the embodiment of the present disclosure, the random sequence initialization value of the pseudo-random sequence configured to scramble the codeword can be determined using the formula $C_{init} = N_{RNTI} * 2^{15} +$

$N_{ID}$, where $C_{init}$ is the random sequence initialization value, $N_{RNTI}$ is the wireless network identification corresponding to the terminal, and $N_{ID}$ is the cell identification of the cell in which the terminal resides. $N_{RNTI}$ and $N_{ID}$ are collectively referred to as terminal identification information.

For codewords corresponding to different PUSCHs, the terminal identification information in the random sequence initialization value calculation formula can be set to be different, thereby obtaining different random sequence initialization values and, in turn, different pseudo-random sequences configured to scramble the codewords. In one example, in the random sequence initialization value calculation formula for codewords corresponding to different PUSCHs, wireless network identifications $N_{RNTI}$ corresponding to the terminals can be set to be different, or cell identifications $N_{ID}$ of the cells in which the terminals reside can be set to be different, or both the wireless network identifications $N_{RNTI}$ corresponding to the terminals and the cell identifications $N_{ID}$ of the cells in which the terminals reside can be set to be different.

This method can be understood as a scrambling method that reuses a single PUSCH codeword. However, different terminal identification information is used for the codewords corresponding to different PUSCHs to obtain different random sequence initialization values for scrambling the codewords corresponding to the different PUSCHs. This, in turn, generates different pseudo-random sequences. This allows different PUSCHs to be scrambled using different scrambling sequences, thereby reducing interference between different PUSCHs occupying the same time domain resources.

In the embodiment of the present disclosure, the random sequence initialization value of the pseudo-random sequence configured to scramble the codeword can also be determined using the formula $C_{init} = N_{RNTI} * 2^{15} + q * 2^{14} + N_{ID}$. $C_{init}$ is the random sequence initialization value, q is the codeword identification information configured to identify different codewords, $N_{RNTI}$ is the wireless network identification corresponding to the terminal, and $N_{ID}$ is the cell identification of the cell in which the terminal resides. $N_{RNTI}$ and $N_{ID}$ can be collectively referred to as terminal identification information.

In the embodiment of the present disclosure, a terminal can configure different identification information to obtain different random sequence initialization values. For example, in the above example random sequence initialization value, the terminal can configure different $N_{RNTI}$ and $N_{ID}$ to obtain different random sequence initialization values $C_{init}$.

On the other hand, the terminal can also configure different codeword identification information q to obtain different random sequence initialization values. For example, when the number of multiple codewords is two, the corresponding number of PUSCHs is also two. The two PUSCHs can be PUSCH1 and PUSCH2, respectively, where the first PUSCH, namely PUSCH1, is scheduled by the PDCCH belonging to CORSERPoolIndex0, and is associated with the first SRS resource set, that is, the SRS resource set with a smaller ID in the SRS resource set, and each SRS resource set is associated with each CORSERPoolIndex. Similarly, the second PUSCH, namely PUSCH2, is scheduled by the PDCCH belonging to CORSERPoolIndexl, and is associated with the second SRS resource set, that is, the SRS resource set with a larger ID in the SRS resource set. PUSCH1 and PUSCH2 each correspond to a codeword, that is, the codewords corresponding to PUSCH1 and PUSCH2 are both codeword 0. In this case, the codeword identification information q of the codeword 0 corresponding to PUSCH1 can be 0, and the codeword identification information q of the codeword 0 corresponding to PUSCH2 can be 1, and vice versa.

It can be understood that the above-described definition of codewords and assignment of values to q is merely an example. The specific implementation can be set according to actual circumstances and is not limited by the present disclosure.

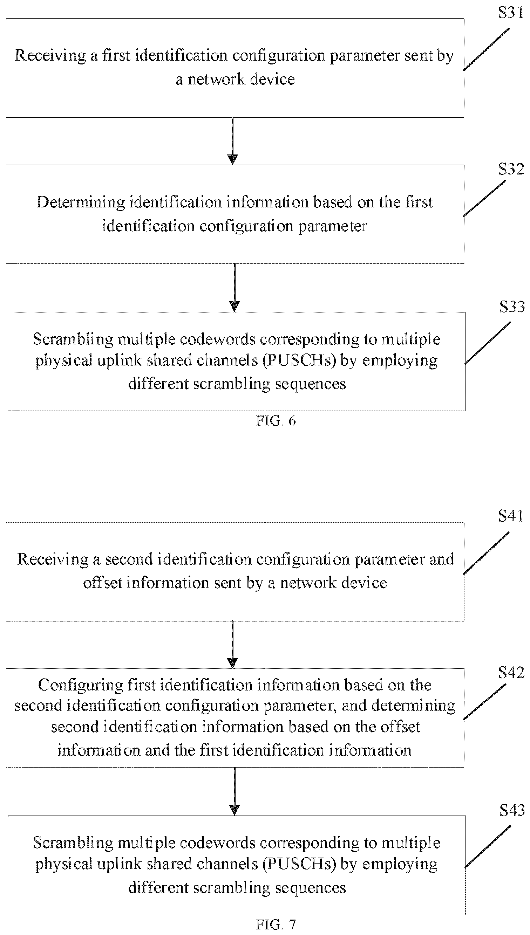

FIG. 6 is a flow chart of a communication method according to an example embodiment. Step S33 is the same as step S11 and is not further described here. As shown in FIG. 6, the communication method further includes the following steps:

In step S31, receiving a first identification configuration parameter sent by a network device.

The first identification configuration parameter configures different identification information.

In step S32, determining identification information based on the first identification configuration parameter.

In the embodiment of the present disclosure, when configuring identification information, the terminal may receive the first identification configuration parameter sent by the network device. The first identification configuration parameter may include multiple different configuration parameters, including the PUSCH high-level parameter dataScramblingIdentityPUSCH and the PUSCH extended high-level parameter dataScramblingIdentityPUSCHi, where i is a positive integer.

For example, the number of PUSCHs is two, but the number of PUSCHs may be multiple and the present disclosure does not limit this. The two PUSCHs may be PUSCH0 and PUSCH1. The terminal may determine the identification information of PUSCH0 based on the received dataScramblingIdentityPUSCH and determine the identification information of PUSCH1 based on the received dataScramblingIdentityPUSCH2. PUSCH0 may be the PUSCH corresponding to the SRS resource set associated with CORESETPoolIndex0, and PUSCH2 may be the PUSCH corresponding to the SRS resource set associated with CORESETPoolIndex1.

It can be understood that the first identification configuration parameter may be set based on actual circumstances and the present disclosure does not limit this. Different first identification configuration information is used to configure identification information for different random sequence initialization values, thereby obtaining different random sequence initialization values.

In the embodiment of the present disclosure, a terminal can configure different identification information using multiple different first identification configuration parameters. For example, the different first identification configuration parameters may be a first identification configuration parameter a and a first identification configuration parameter b, where a is used to configure identification information $N_{ID0}$ for the codeword corresponding to the first of two different PUSCHs, and b is used to configure identification information $N_{ID1}$ for the codeword corresponding to the other of two different PUSCHs. The values of $N_{ID0}$ and $N_{ID1}$ range from 0 to 1023. After successful configuration, two different random sequence initialization values are obtained. Pseudo-random sequences are then determined based on the random sequence initialization values and configured to scramble the codewords corresponding to the different PUSCHs.

By the technical solutions of the embodiment of the present disclosure, a terminal receives multiple different first identification configuration parameters sent by a network device, configures different identification information for codewords corresponding to different PUSCHs, and thereby obtains different scrambling sequences. This reduces transmission interference between codewords corresponding to different PUSCHs during uplink transmission, optimizes uplink transmission performance, and improves transmission quality.

FIG. 7 is a flow chart illustrating a communication method according to an example embodiment. Step S43 is the same as step S11 and is not further described here. As shown in FIG. 7, the communication method further includes the following steps:

In step S41, receiving a second identification configuration parameter and offset information sent by a network device.

In step S42, configuring first identification information based on the second identification configuration parameter, and determining second identification information based on the offset information and the first identification information.

In the embodiment of the present disclosure, a terminal may receive a second identification configuration parameter sent by a network device. The second identification configuration parameter is used to configure the first identification information. The first identification information may be considered to be the identification information of the codeword corresponding to the first PUSCH among multiple PUSCHs. The second identification configuration parameter may be the PUSCH high-layer parameter dataScramblingIdentityPUSCH. The first PUSCH may be the PUSCH corresponding to the SRS resource set of CORESETPoolindex0. It can be understood that the first PUSCH among the multiple PUSCHs may be selected based on actual needs, and the second identification configuration parameter may also be set based on actual needs, and the present disclosure does not limit this.

In the embodiment of the present disclosure, the terminal may also receive the offset information sent by the network device. The offset information is used together with the first identification information to determine second identification information. The second identification information can be considered as the identification information of the codewords corresponding to the remaining PUSCHs in the multiple PUSCHs. For example, if there are two PUSCHs, the two PUSCHs may be PUSCH0 and PUSCH1. The terminal receives the second identification configuration parameter sent by the network device and determines the identification information of the codeword corresponding to PUSCH0 based on the second identification configuration parameter. Furthermore, the terminal receives offset information sent by the network device and, based on the determined identification information of the codeword corresponding to PUSCH0 and the offset information, determines the identification information of the codeword corresponding to PUSCH1.

It can be understood that the number of PUSCHs may be greater than two, in which case the offset information may also be multiple. For example, when there are three PUSCHs, namely PUSCH0, PUSCH1, and PUSCH2, the terminal may determine identification information of codeword corresponding to PUSCH0 based on the second identification configuration parameter. Then, based on the determined identification information of the codeword corresponding to PUSCH0 and first offset information, the terminal may determine the identification information of the codeword corresponding to PUSCH1. Furthermore, based on the determined identification information of the codeword corresponding to PUSCH0 and second offset information, the terminal may determine the identification information of the codeword corresponding to PUSCH2. The number of PUSCHs and the number of offset information may be set based on actual needs and are not limited in the present disclosure.

In the embodiment of the present disclosure, the second identification information, the first identification information, and the offset information satisfy the following formula:

$N_{ID1}=\mod(N_{ID0}+OFFSET,1024)$

where $N_{ID1}$ represents the second identification information, $N_{ID0}$ represents the first identification information, OFFSET represents the offset information, and mod( ) represents the modulo function.

The value range of $N_{ID0}$ is between 0 and 1023. The value range of the second identification information $N_{ID1}$, obtained by performing a modulo function based on the first identification information $N_{ID0}$, the offset information OFFSET, and the modulo function, is also between 0 and 1023. Different random sequence initialization values can be determined based on the first and second identification information.

By the technical solution of the embodiment of the present disclosure, the terminal receives the second identification configuration parameter and offset information sent by the network device to configure different identification information for codewords corresponding to different PUSCHs, thereby obtaining different scrambling sequences. This reduces transmission interference between codewords corresponding to different PUSCHs during uplink transmission, optimizes uplink transmission performance, and improves transmission quality.

In the embodiment of the present disclosure, each of the multiple PUSCHs includes:

Dynamic Grant PUSCH (DG PUSCH); or
Configured Grant PUSCH (CG PUSCH) type 1; or
CG PUSCH type 2.

Taking the example of two PUSCHs, the two PUSCHs may be PUSCH0 and PUSCH1. PUSCH0 and PUSCH1 may both be DG PUSCHs, or both be CG PUSCH type 1, or both be CG PUSCH type 2. Alternatively, PUSCH0 may be DG PUSCH, and PUSCH1 may be CG PUSCH type 1 or CG PUSCH type 2. Alternatively, PUSCH0 may be CG PUSCH type 1, and PUSCH1 may be DG PUSCH or CG PUSCH type 2. Alternatively, PUSCH0 may be CG PUSCH type 2, and PUSCH1 may be DG PUSCH or CG PUSCH type 1.

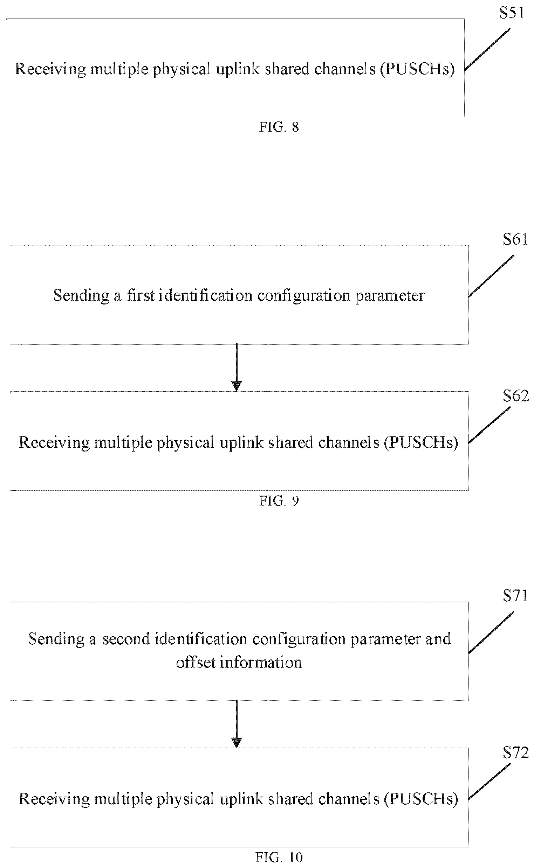

FIG. 8 is a flow chart illustrating a communication method according to an example embodiment. As shown in FIG. 8, the method is performed by a network device and includes the following steps.

In step S51, receiving multiple physical uplink shared channels (PUSCHs).

The multiple PUSCHs correspond to multiple codewords, and the multiple codewords are scrambled using different scrambling sequences.

Furthermore, multiple PUSCHs are associated with different panels and/or TRPs, and multiple PUSCHs are scheduled by MDCI, supporting MDCI-based STxMP.

The communication method provided in the embodiments of the present disclosure can be used to enhance scrambling of PUSCH STxMP based on MDCI. That is, in the embodiments of the present disclosure, the network device can configure terminals to transmit based on STxMP and scheduled by MDCI. Furthermore, in uplink STxMP transmission of PUSCHs scheduled by MDCI, the time domain resources of multiple PUSCHs may fully or partially overlap, which may cause interference when different PUSCHs are transmitted simultaneously through different panels.

In the embodiments of the present disclosure, by scrambling the multiple codewords corresponding to the multiple PUSCHs using different scrambling sequences and then receiving the multiple PUSCHs, interference can be reduced when multiple PUSCHs with fully or partially overlapping time domain resources are transmitted simultaneously through different panels.

In the embodiments of the present disclosure, multiple PUSCHs are associated with different panels and/or TRPs. In other words, multiple codewords corresponding to multiple PUSCHs associated with different panels and/or TRPs can be scrambled using different scrambling sequences. For example, different bit-level scramblings can be performed. PUSCH-based communication can then be performed based on the scrambled codewords, thereby reducing transmission interference between codewords corresponding to different PUSCHs during uplink transmission.

By the technical solutions of the embodiments of the present disclosure, the network device receives multiple PUSCHs corresponding to codewords scrambled using different scrambling sequences, reducing transmission interference between codewords corresponding to different PUSCHs during uplink transmission, optimizing uplink transmission performance, and improving transmission quality.

In the embodiments of the present disclosure, multiple PUSCHs being associated with different panels and/or TRPs can include at least one of the following:

multiple PUSCHs being associated with different TCI states;
multiple PUSCHs being associated with different CORSERPoolIndex;
multiple PUSCHs being associated with different SRS source sets.

In the embodiments of the present disclosure, multiple codewords are scrambled using different pseudo-random sequences respectively. The different pseudo-random sequences are determined based on different random sequence initialization values.

In one embodiment, the pseudo-random sequence can be configured to scramble codewords. For example, the original signal can be multiplied by the pseudo-random sequence to generate a new signal, thereby completing the scrambling. The pseudo-random sequence is generated based on the pseudo-random sequences. The terminal can generate multiple different pseudo-random sequences, obtain a pseudo-random sequence from the pseudo-random sequences, and use the pseudo-random sequence to scramble the codeword. The network device communicates with the terminal based on the PUSCH corresponding to the scrambled codeword.

In one embodiment, the different pseudo-random sequences can be determined based on different random sequence initialization values. The random sequence initialization values can be generated using different longest linear feedback shift register sequences, such as an m-sequence, and the pseudo-random sequences are determined based on the random sequence initialization values.

In the embodiment of the present disclosure, multiple different pseudo-random sequences are determined based on the multiple different random sequence initialization values, and the multiple codewords are scrambled by employing the multiple different pseudo-random sequences. This can avoid transmission interference between multiple PUSCHs corresponding to multiple codewords on the same time domain resources.

In the embodiment of the present disclosure, the random sequence initialization value can be determined based on identification information, with different random sequence initialization values corresponding to different identification information. Furthermore, the identification information may include terminal identification information, or the identification information may include terminal identification information and codeword identification information. Furthermore, the terminal identification information includes the wireless network temporary identification corresponding to the terminal and the cell identification of the cell in which the terminal resides.

In the embodiment of the present disclosure, the random sequence initialization value of the pseudo-random sequence configured to scramble the codeword can be determined using the formula $C_{init} = N_{RNTI} * 2^{15} + N_{ID}$, where $C_{init}$ is the random sequence initialization value, $N_{RNTI}$ is the wireless network identification corresponding to the terminal, and $N_{ID}$ is the cell identification of the cell in which the terminal resides. $N_{RNTI}$ and $N_{ID}$ may be collectively referred to as terminal identification information.

For codewords corresponding to different PUSCHs, the terminal identification information in the random sequence initialization value calculation formula can be set to be different, thereby obtaining different random sequence initialization values and, in turn, different pseudo-random sequences configured to scramble the codewords. In one example, in the random sequence initialization value calculation formula for codewords corresponding to different PUSCHs, wireless network identifications $N_{RNTI}$ corresponding to the terminal can be set to be different, or cell identifications $N_{ID}$ of the cells in which the terminal resides can be set to be different, or both the wireless network identifications $N_{RNTI}$ corresponding to the terminal and the cell identifications $N_{ID}$ of the cells in which the terminal resides can be set to be different.

This method can be understood as a scrambling method that reuses a single PUSCH codeword. However, different terminal identification information is used for the codewords corresponding to different PUSCHs to obtain different random sequence initialization values for scrambling the codewords corresponding to the different PUSCHs. This, in turn, generates different pseudo-random sequences. This allows different PUSCHs to be scrambled using different scrambling sequences, thereby reducing interference between different PUSCHs occupying the same time domain resources.

In the embodiment of the present disclosure, the random sequence initialization value of the pseudo-random sequence configured to scramble the codeword can also be determined using the formula $C_{init} = N_{RNTI} * 2^{15} + q * 2^{14} + N_{ID}$. $C_{init}$ is the random sequence initialization value, q is the codeword identification information configured to identify different codewords, $N_{RNTI}$ is the wireless network identification corresponding to the terminal, and $N_{ID}$ is the cell identification of the cell in which the terminal resides. $N_{RNTI}$ and $N_{ID}$ can be collectively referred to as terminal identification information.

In the embodiment of the present disclosure, different random sequence initialization values can be obtained based on different identification information. For example, in the above example random sequence initialization values, different $N_{RNTI}$ and $N_{ID}$ can be configured to obtain different random sequence initialization values $C_{init}$.

On the other hand, different random sequence initialization values can also be obtained by configuring different codeword identification information q. For example, when the number of multiple codewords is two, the corresponding number of PUSCHs is also two. The two PUSCHs can be PUSCH1 and PUSCH2, respectively, where the first PUSCH, namely PUSCH1, is scheduled by the PDCCH belonging to CORSERPoolIndex0, and is associated with the first SRS resource set, that is, the SRS resource set with a smaller ID in the SRS resource set, and each SRS resource set is associated with each CORSERPoolIndex. Similarly, the second PUSCH, namely PUSCH2, is scheduled by the PDCCH belonging to CORSERPoolIndexl, and is associated with the second SRS resource set, that is, the SRS resource set with a larger ID in the SRS resource set. PUSCH1 and PUSCH2 each correspond to a codeword, that is, the codewords corresponding to PUSCH1 and PUSCH2 are both codeword 0. In this case, the codeword identification information q of the codewrd 0 corresponding to PUSCH1 can be 0, and the codeword identification information q of the codeword 0 corresponding to PUSCH2 can be 1, and vice versa.

It can be understood that the above-described definition of codewords and assignment of value to q is merely an example. The specific implementation can be set according to actual circumstances and is not limited by the present disclosure.

FIG. 9 is a flow chart of a communication method according to an example embodiment. Step S62 is identical to step S51 and is not further described here. As shown in FIG. 9, the communication method further includes the following steps:

In step S61, sending a first identification configuration parameter.

The first identification configuration parameter is used to configure different identification information.

In the embodiment of the present disclosure, the network device can send the first identification configuration parameter to the terminal so that the terminal can determine identification information based on the first identification configuration parameter. The first identification configuration parameter can include multiple different configuration parameters, including the PUSCH high-level parameter dataScramblingIdentityPUSCH and the PUSCH extended high-level parameter dataScramblingIdentityPUSCHi, where i is a positive integer.

For example, the number of PUSCHs is two, but the number of PUSCHs may be multiple and the present disclosure does not limit this. The two PUSCHs can be PUSCH0 and PUSCH1. The terminal can determine the identification information of PUSCH0 based on the received dataScramblingIdentityPUSCH and determine the identification information of PUSCH1 based on the received dataScramblingIdentityPUSCH2. PUSCH0 may be the PUSCH corresponding to the SRS resource set associated with CORESETPoolIndex0, and PUSCH2 can be the PUSCH corresponding to the SRS resource set associated with CORESETPoolIndex1.

It can be understood that the first identification configuration parameter may be set based on actual circumstances and the present disclosure does not limit this. Different first identification configuration information is used to configure identification information for different random sequence initialization values, thereby obtaining different random sequence initialization values.

In the embodiments of the present disclosure, multiple different first identification configuration parameters can be used to configure different identification information. For example, the different first identification configuration parameters may be a first identification configuration parameter a and a first identification configuration parameter b, where a is used to configure the identification information $N_{ID0}$ for the codeword corresponding to the first of two different PUSCHs, and b is used to configure the identification information $N_{ID1}$ for the codeword corresponding to the other of the two different PUSCHs. The values of $N_{ID0}$ and $N_{ID1}$ both range from 0 to 1023. After successful configuration, two different random sequence initialization values are obtained, and pseudo-random sequences are determined based on the random sequence initialization values. The pseudo-random sequences are configured to scramble the codewords corresponding to the different PUSCHs.

By the technical solutions of the embodiments of the present disclosure, a network device transmits multiple different first identification configuration parameters, allowing a terminal to configure different identification information for codewords corresponding to different PUSCHs, thereby obtaining different scrambling sequences. This reduces transmission interference between codewords corresponding to different PUSCHs during uplink transmission, optimizes uplink transmission performance, and improves transmission quality.

FIG. 10 is a flow chart of a communication method according to an example embodiment. Step S72 is identical to step S51 and is not further described here. As shown in FIG. 10, the communication method further includes the following steps:

In step S71, sending a second identification configuration parameter and offset information.

The second identification configuration parameter is used to configure the first identification information among the different identification information, and the offset information is used by the terminal to determine second identification information based on the first identification information and the offset information. The second identification information is identification information that is different from the first identification information among the different identification information.

In the embodiment of the present disclosure, the network device may send the second identification configuration parameter to the terminal, so that the terminal configures the first identification information based on the second identification configuration parameter. The first identification information may be considered to be the identification information of the codeword corresponding to the first PUSCH among multiple PUSCHs. The second identification configuration parameter may be the PUSCH high-layer parameter dataScramblingIdentityPUSCH. The first PUSCH may be the PUSCH corresponding to the SRS resource set of CORESETPoolindex0. It can be understood that the first PUSCH among the multiple PUSCHs may be selected based on actual needs, and the second identification configuration parameter may also be set based on actual conditions, which is not limited in the present disclosure.

In the embodiments of the present disclosure, the network device may also send offset information to the terminal, so that the terminal determines second identification information based on the offset information and the first identification information. The second identification information can be considered as the identification information of the codewords corresponding to the remaining PUSCHs in the multiple PUSCHs. For example, if there are two PUSCHs, the two PUSCHs may be PUSCH0 and PUSCH1. The terminal receives the second identification configuration parameter sent by the network device and determines the identification information of the codeword corresponding to PUSCH0 based on the second identification configuration parameter. Furthermore, the terminal receives the offset information sent by the network device and, based on the determined identification information of the codeword corresponding to PUSCH0 and the offset information, determines the identification information of the codeword corresponding to PUSCH1.

It can be understood that the number of PUSCHs may be greater than two, in which case the offset information may also be multiple. For example, when there are three PUSCHs, namely PUSCH0, PUSCH1, and PUSCH2, the terminal may determine the identification information of the codeword corresponding to PUSCH0 based on the second identification configuration parameter. Then, based on the determined identification information of the codeword corresponding to PUSCH0 and first offset information, the terminal may determine the identification information of the codeword corresponding to PUSCH1. Furthermore, based on the determined identification information of the codeword corresponding to PUSCH0 and second offset information, the terminal may determine the identification information of the codeword corresponding to PUSCH2. The number of PUSCHs and the number of offset information may be set based on actual needs and are not limited in the present disclosure.

In the embodiment of the present disclosure, the second identification information, the first identification

$$N_{ID1}=\mathrm{mod}(N_{ID0}+OFFSET,1024)$$

information, and the offset information satisfy the following formula: where $N_{ID1}$ represents the second identification information, $N_{ID0}$ represents the first identification information, OFFSET represents the offset information, and mod( ) represents the modulo function.

The value range of $N_{ID0}$ is between 0 and 1023. The value range of the second identification information $N_{ID1}$, obtained by performing a modulo function based on the first identification information $N_{ID0}$, the offset information OFFSET, and the modulo function, is also between 0 and 1023. Different random sequence initialization values can be determined based on the first and second identification information.

By the technical solution of the embodiments of the present disclosure, the network device sends the second identification configuration parameter and offset information, so that the terminal can configure different identification information for codewords corresponding to different PUSCHs, thereby obtaining different scrambling sequences. This reduces transmission interference between codewords corresponding to different PUSCHs during uplink transmission, optimizes uplink transmission performance, and improves transmission quality.

In the embodiment of the present disclosure, each of the multiple PUSCHs includes:

DG PUSCH; or
CG PUSCH type 1; or
CG PUSCH type 2.

Taking the example of two PUSCHs, the two PUSCHs may be PUSCH0 and PUSCH1. PUSCH0 and PUSCH1 may both be DG PUSCHs, or both be CG PUSCH type 1, or both be CG PUSCH type 2. Alternatively, PUSCH0 may be DG PUSCH, and PUSCH1 may be CG PUSCH type 1 or CG PUSCH type 2. Alternatively, PUSCH0 may be CG PUSCH type 1, and PUSCH1 may be DG PUSCH or CG PUSCH type 2. Alternatively, PUSCH0 may be CG PUSCH type 2, and PUSCH1 may be DG PUSCH or CG PUSCH type 1.

It can be understood that the technical implementations involved in the communication process performed by the network device in the embodiments of the present disclosure are applicable to the communication process performed by the terminal in the embodiments of the present disclosure. Therefore, where the technical implementations of the network device performing communication process are not fully described, please refer to the relevant description of the terminal performing communication process and will not be repeated here.

It can be understood that the communication method provided in the embodiments of the present disclosure is applicable to the process of communication between a terminal and a network device through interaction. The process of communication between the terminal and the network device through interaction is not described in detail in the embodiments of the present disclosure.

It should be noted that those skilled in the art will understand that the various implementations/embodiments mentioned above in the embodiments of the present disclosure can be used in conjunction with the aforementioned embodiments or independently. Whether used independently or in conjunction with the aforementioned embodiments, the implementation principles are similar. In the embodiments of the present disclosure, some embodiments are described using implementations used together. Of course, those skilled in the art will understand that such examples do not limit the embodiments of the present disclosure.

Based on the same concept, the embodiments of the present disclosure also provide a communication device.

It can be understood that, to implement the aforementioned functions, the communication device provided in the embodiments of the present disclosure includes hardware structures and/or software modules corresponding to respective functions. In combination with the various example units and algorithm steps disclosed in the embodiments of the present disclosure, the embodiments of the present disclosure can be implemented in hardware or a combination of hardware and computer software. Whether a function is executed in hardware or by computer software driving hardware depends on the specific application and design constraints of the technical solution. Those skilled in the art may use different methods to implement the described functions for each specific application, but such implementations should not be considered beyond the scope of the technical solution of the embodiments of the present disclosure.

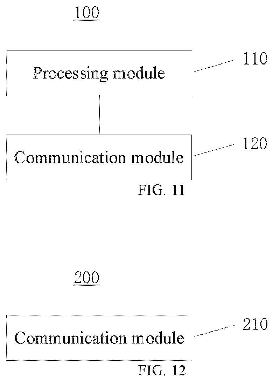

FIG. 11 is a block diagram of a communications device according to an example embodiment. Referring to FIG. 11, the device 100 includes a processing module 110.

The processing module 110 is configured to scramble multiple codewords using different scrambling sequences. The multiple codewords correspond to multiple physical uplink shared channels (PUSCHs).

The multiple PUSCHs are associated with different panels and/or TRPs respectively, and the multiple PUSCHs are scheduled by multiple downlink control information (MDCIs) respectively, supporting simultaneous transmission of multiple panels based on MDCIs.

In the embodiments of the present disclosure, the device 100 also includes a communication module 120. The communication module 120 is configured to send multiple PUSCHs.

In an embodiment of the present disclosure, multiple PUSCHs being associated with different panels and/or TRPs respectively includes at least one of the following:

multiple PUSCHs being associated with different TCI states;
multiple PUSCHs being associated with different CORESETPoolindex;
multiple PUSCHs being associated with different SRS resource sets.

In an embodiment of the present disclosure, employing different scrambling sequences to scramble multiple codewords includes:
employing different pseudo-random sequences respectively to scramble the multiple codewords.

The different pseudo-random sequences are determined based on different random sequence initialization values.

In an embodiment of the present disclosure, the random sequence initialization value is determined based on identification information, and different random sequence initialization values correspond to different identification information.

The identification information includes terminal identification information, or the identification information includes terminal identification information and a codeword identification.

The terminal identification information includes a wireless network temporary identification corresponding to the terminal and a cell identification of the cell in which the terminal resides.

In an embodiment of the present disclosure, the method further includes:
receiving a first identification configuration parameter sent by a network device.

The first identification configuration parameter is used to configure different identification information.

In an embodiment of the present disclosure, the method further includes:
receiving a second identification configuration parameter and offset information sent by a network device.

The second identification configuration parameter is used to configure the first identification information, and the offset information is used by the terminal to determine the second identification information based on the first identification information and the offset information.

The second identification information is different from the first identification information.

In an embodiment of the present disclosure, the second identification information, the first identification information, and the offset information satisfy the following formula:

$$N_{ID1} = mod(N_{ID0} + OFFSET, 1024)$$

where $N_{ID1}$ is the second identification information, $N_{ID0}$ is the first identification information, OFFSET is the offset information, and mod( ) is the modulo function.

In an embodiment of the present disclosure, each of the multiple PUSCHs includes:

DG PUSCH; or
CG PUSCH type 1; or
CG PUSCH type 2.

By the technical solution of the embodiment of the present disclosure, by employing different scrambling sequences to scramble multiple codewords corresponding to multiple PUSCHs sent simultaneously via different panels, transmission interference between codewords corresponding to different PUSCHs during uplink transmission is reduced, uplink transmission performance is optimized, and transmission quality is improved.

FIG. 12 is a block diagram of a communications device according to an example embodiment. Referring to FIG. 12, the device 200 includes a communications module 210.

The communications module 210 is configured to receive multiple physical uplink shared channels (PUSCHs).

The multiple PUSCHs correspond to multiple codewords, each scrambled using a different scrambling sequence. Furthermore, the multiple PUSCHs are associated with different panels and/or transmission reception points (TRPs) respectively, and are scheduled by multiple downlink control information (MDCIs) respectively, supporting simultaneous transmission of multiple panels based on MDCI.

In an embodiment of the present disclosure, the multiple PUSCHs being associated with different panels and/or TRPs respectively includes at least one of the following:

multiple PUSCHs being associated with different TCI states;
multiple PUSCHs being associated with different CORESETPoolIndex;
multiple PUSCHs being associated with different SRS resource sets.

In an embodiment of the present disclosure, the multiple codewords are scrambled by employing different pseudo-random sequences.

The different pseudo-random sequences are determined based on different random sequence initialization values.

In the embodiment of the present disclosure, a random sequence initialization value is determined based on identification information, with different random sequence initialization values corresponding to different identification information.

The identification information includes terminal identification information, or the identification information includes terminal identification information and a codeword identification.

The terminal identification information includes a wireless network temporary identification corresponding to the terminal and a cell identification of a cell where the terminal resides.

In the embodiment of the present disclosure, the method further includes:

sending a first identification configuration parameter.

The first identification configuration parameter is used to configure different identification information.

In the embodiment of the present disclosure, the method further includes:

sending a second identification configuration parameter and offset information.

The second identification configuration parameter is used to configure the first identification information, and the offset information is used by the terminal to determine the second identification information based on the first identification information and the offset information.

The second identification information is different from the first identification information.

In the embodiment of the present disclosure, the second identification information, the first identification information, and the offset information satisfy the following equation: **[0217]** where $N_{ID1}$ is the second identification information, $N_{ID0}$ is the first identification information, OFFSET is the offset information, and mod( ) is the modulo function.

$$N_{ID1}=mod(N_{ID0}+OFFSET,1024)$$

In the embodiment of the present disclosure, each of the multiple PUSCHs includes:

DG PUSCH; or
CG PUSCH type 1; or
CG PUSCH type 2.

By the technical solution of the embodiment of the present disclosure, the network device receives multiple PUSCHs corresponding to multiple codewords scrambled using different scrambling sequences, reducing transmission interference between codewords corresponding to different PUSCHs during uplink transmission, optimizing uplink transmission performance, and improving transmission quality.

Regarding the device in the above-mentioned embodiment, the specific manner in which each module performs operations has been described in detail in the embodiment related to the method and will not be elaborated upon here.

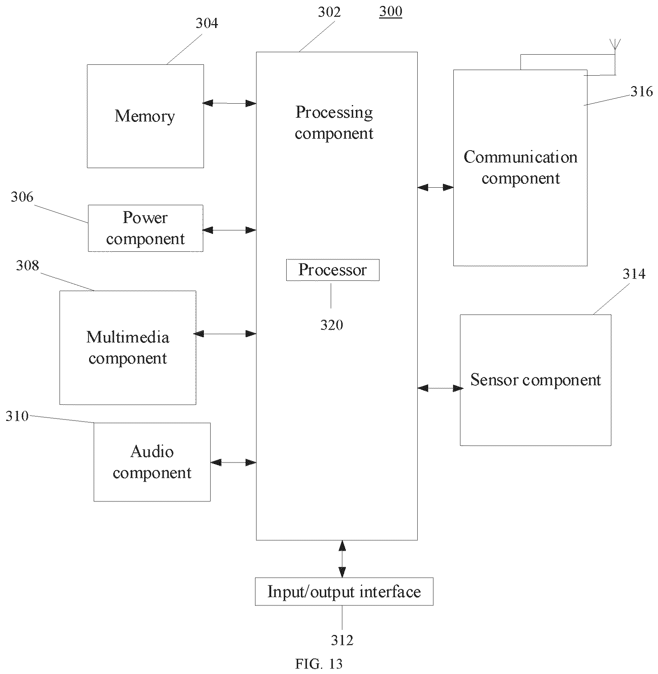

FIG. 13 is a block diagram of a device 300 for communication, according to an example embodiment. For example, the device 300 may be a mobile phone, a computer, a digital broadcast terminal, a messaging device, a game console, a tablet device, a medical device, a fitness device, a personal digital assistant, etc.

Referring to FIG. 13, the device 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operation of the device 300, such as operations associated with display, phone calls, data communications, camera operation, and recording. The processing component 302 may include one or more processors 320 to execute instructions to perform all or part of the steps of the aforementioned method. Furthermore, the processing component 302 may include one or more modules to facilitate interaction between the processing component 302 and other components. For example, the processing component 302 may include a multimedia module to facilitate interaction between the multimedia component 308 and the processing component 302.

The memory 304 is configured to store various types of data to support the operation of the device 300. Examples of such data include instructions for any application or method operating on the device 300, contact data, phonebook data, messages, images, videos, and the like. The memory 304 can be implemented using any type of volatile or nonvolatile memory device, or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 306 provides power to the various components of the device 300. The power component 306 may include a power management system, one or more power supplies, and other components associated with generating, managing, and distributing power for the device 300.

The multimedia component 308 includes a screen that provides an output interface between the device 300 and a user. In some embodiments, the screen may include a liquid crystal display (LCD) and a touch panel (TP). If the screen includes a touch panel, it may be implemented as a touch screen to receive input signals from the user. The touch panel includes one or more touch sensors to sense touches, swipes, and gestures on the touch panel. The touch sensors may not only sense the boundaries of a touch or swipe action, but also the duration and pressure associated with the touch or swipe action. In some embodiments, the multimedia component 308 includes a front camera and/or a rear camera. When the device 300 is in an operating mode, such as capture mode or video mode, the front camera and/or the rear camera can receive external multimedia data. Each of the front camera and the rear camera can have a fixed optical lens system or have variable focal length and optical zoom capability.

The audio component 310 is configured to output and/or input audio signals. For example, the audio component 310 includes a microphone (MIC) configured to receive external audio signals when the device 300 is in an operating mode, such as call mode, record mode, or voice recognition mode. The received audio signals can be further stored in the memory 304 or sent via the communication component 316. In some embodiments, the audio component 310 also includes a speaker for outputting audio signals.

The I/O interface 312 provides an interface between the processing component 302 and peripheral interface modules, such as a keyboard, click wheel, buttons, etc. These buttons may include, but are not limited to, a home button, volume buttons, start button, and lock button. The sensor assembly 314 includes one or more sensors for providing various status assessments of the device 300. For example, the sensor assembly 314 can detect the open/closed state of the device 300, the relative positioning of components, such as the display and keypad of device 300. The sensor assembly 314 can also detect changes in the position of the device 300 or a component thereof, the presence or absence of user contact with the device 300, the orientation or acceleration/deceleration of the device 300, and a temperature change in the device 300. The sensor assembly 314 may include a proximity sensor configured to detect the presence of nearby objects without any physical contact. The sensor assembly 314 may also include an optical sensor, such as a CMOS or CCD image sensor, for use in imaging applications. In some embodiments, the sensor assembly 314 may also include an accelerometer, a gyroscope, a magnetic sensor, a pressure sensor, or a temperature sensor.

The communication assembly 316 is configured to facilitate wired or wireless communication between the device 300 and other devices. The device 300 can access wireless networks based on communication standards, such as WiFi, 2G, or 3G, or a combination thereof. In one example embodiment, the communication component 316 receives broadcast signals or broadcast-related information from an external broadcast management system via a broadcast channel. In one example embodiment, the communication component 316 also includes a near-field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the device 300 may be implemented by one or more of an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic components to perform the aforementioned methods.

In an example embodiment, a non-transitory computer-readable storage medium including instructions is also provided, such as a memory 304 including instructions. The instructions are executable by the processor 320 of the device 300 to perform the aforementioned methods. For example, the non-transitory computer-readable storage medium may be a ROM, random access memory (RAM), a CD-ROM, a magnetic tape, a floppy disk, an optical data storage device, or the like.

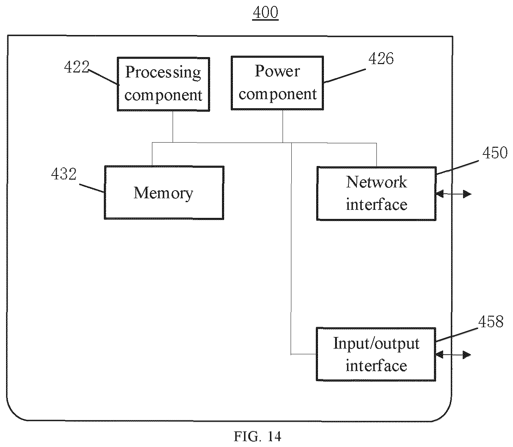

FIG. 14 is a block diagram of a device 400 for communication, according to an example embodiment. For example, the device 400 can be provided as a server. Referring to FIG. 14, the device 400 includes a processing component 422, which further includes one or more processors, and a memory resource represented by the memory 432 for storing instructions, such as applications, executable by the processing component 422. The applications stored in memory 432 may include one or more modules, each corresponding to a set of instructions. Furthermore, the processing component 422 is configured to execute instructions to perform the aforementioned method.

The device 400 may also include a power component 426 configured to perform power management for the device 400, a wired or wireless network interface 450 configured to connect the device 400 to a network, and an input/output (I/O) interface 458. The device 400 may operate based on an operating system stored in memory 432, such as Windows Server™, Mac OS X™, Unix™, Linux™, FreeBSD™, or the like.

It should be further understood that, in the present disclosure, "multiple" refers to two or more, and other quantifiers are used similarly. "And/or" describes a relationship between associated objects, indicating that three possible relationships exist. For example, "A and/or B" can mean: A exists alone, A and B exist simultaneously, or B exists alone. The character "/" generally indicates that the associated objects are in an "or" relationship. The singular forms "a", "an", "the," and "said" are intended to include the plural forms, unless the context clearly indicates otherwise.

It should be further understood that the meaning of terms such as "in response to" and "if" used in the present disclosure depends on the context and actual usage scenario. For example, the term "in response to" as used herein can be interpreted as "when", "upon" or "if".

It should be further understood that the terms "first" and "second," etc., are used to describe various types of information, but such information should not be limited to these terms. These terms are used solely to distinguish information of the same type from one another and do not indicate a specific order or level of importance. In fact, the terms "first," "second," etc., are fully interchangeable. For example, first information could be referred to as second information, and similarly, second information could be referred to as first information, without departing from the scope of the present disclosure.

It should be further understood that although operations are described in a particular order in the drawings in the embodiments of the present disclosure, this should not be construed as requiring that these operations be performed in the particular order shown, or in a serial order, or that all illustrated operations be performed to achieve the desired results. In certain circumstances, multitasking and parallel processing may be advantageous.

Other embodiments of the present disclosure will readily occur to those skilled in the art after considering the specification and practicing the present disclosure herein. This application is intended to cover any variations, uses, or adaptations of the present disclosure that follow from the general principles of the present disclosure and include common knowledge or customary techniques in the art not disclosed herein.

It should be understood that the present disclosure is not limited to the precise configuration described above and shown in the drawings, and that various modifications and variations are possible without departing from the scope of the present disclosure. The scope of the present disclosure is limited solely by the appended claims.

**Claims**

1. A communication method, performed by a terminal, comprising:

    scrambling multiple codewords by employing different scrambling sequences, wherein the multiple codewords correspond to multiple physical uplink shared channels PUSCHs;
    wherein the multiple PUSCHs are associated with different antenna panels and/or transmission reception points TRPs respectively, and are scheduled by multiple downlink control information MDCI respectively, supporting simultaneous transmission of multiple panels based on MDCI.

2. The method according to claim 1, further comprising: sending the multiple PUSCHs.

3. The method according to claim 1, wherein the multiple PUSCHs being associated with different panels and/or TRPs comprises at least one of:

    the multiple PUSCHs being associated with different transmission configuration indicator TCI states;
    the multiple PUSCHs being associated with different control resource pool indices; or
    the multiple PUSCHs being associated with different sounding reference signal resource sets.

4. The method according to any one of claims 1 to 3, wherein scrambling the multiple codewords by employing the different scrambling sequences comprises:

    scrambling the multiple codewords by employing different pseudo-random sequences respectively;
    wherein the different pseudo-random sequences are determined based on different random sequence initialization values.

5. The method according to claim 4, wherein the random sequence initialization values are determined based on identification information, and different random sequence initialization values correspond to different identification information;

    the identification information comprises terminal identification information, or the identification information comprises terminal identification information and a codeword identification;
    wherein the terminal identification information comprises a wireless network temporary identification corresponding to the terminal and a cell identification of a cell where the terminal resides.

6. The communication method according to claim 5, further comprising:

    receiving a first identification configuration parameter sent by a network device;
    wherein the first identification configuration parameter is used to configure the different identification information.

7. The communication method according to claim 5, further comprising:

    receiving a second identification configuration parameter and offset information sent by a network device;
    the second identification configuration parameter is used to configure first identification information, and the offset information is used by the terminal to determine second identification information based on the first identification information and the offset information;

the second identification information is different from the first identification information.

8. The communication method according to claim 7, wherein the second identification information, the first identification information, and the offset information satisfy the following formula: wherein $N_{ID1}$ is the second identification information, $N_{ID0}$ is the first identification information, OFFSET is the offset information, and mod( ) is a modulo function.

$$N_{ID1}=\mathrm{mod}(N_{ID0}+\mathrm{OFFSET},1024)$$

9. The communication method according to claim 1, wherein each of the multiple PUSCHs comprises:

a dynamic grant physical uplink shared channel DG PUSCH; or

a configured grant physical uplink shared channel CG PUSCH type 1; or

a configured grant physical uplink shared channel CG PUSCH type 2.

10. A communication method, performed by a network device, comprising:

receiving multiple physical uplink shared channels PUSCHs, wherein the multiple PUSCHs correspond to multiple codewords, and the multiple codewords are scrambled by employing different scrambling sequences respectively;

the multiple PUSCHs are associated with different antenna panels and/or transmission reception points (TRPs), and the multiple PUSCHs are scheduled by multiple downlink control information MDCI respectively, supporting simultaneous transmission of multiple panels based on MDCI.

11. The method according to claim 10, wherein the multiple PUSCHs being associated with different panels and/or TRPs comprises at least one of:

the multiple PUSCHs being associated with different transmission configuration indicator (TCI) states respectively;

the multiple PUSCHs being associated with different control resource pool indices; or

the multiple PUSCHs being associated with different sounding reference signal resource sets.

12. The method according to claim 10 or 11, wherein the multiple codewords are scrambled by employing different pseudo-random sequences respectively; wherein the different pseudo-random sequences are determined based on different random sequence initialization values.

13. The method according to claim 12, wherein the random sequence initialization values are determined based on identification information, and different random sequence initialization values correspond to different identification information;

the identification information comprises terminal identification information, or the identification information comprises terminal identification information and a codeword identification;

wherein the terminal identification information comprises a wireless network temporary identification corresponding to the terminal and a cell identification of a cell where the terminal resides.

14. The method according to claim 13, further comprising:

sending a first identification configuration parameter;

wherein the first identification configuration parameter is used to configure the different identification information.

15. The method according to claim 13, further comprising:

sending a second identification configuration parameter and offset information;

the second identification configuration parameter is used to configure first identification information, and the offset information is used by the terminal to determine second identification information based on the first identification information and the offset information;

the second identification information is different from the first identification information.

16. The method according to claim 15, wherein the second identification information, the first identification information, and the offset information satisfy the following formula: wherein $N_{ID1}$ is the second identification information, $N_{ID0}$ is the first identification information, OFFSET is the offset information, and mod( ) is a modulo function.

$$N_{ID1}=\mathrm{mod}(N_{ID0}+\mathrm{OFFSET},1024)$$

17. The communication method according to claim 10, wherein each of the multiple PUSCHs comprises:

a dynamic grant physical uplink shared channel DG PUSCH; or

a configured grant physical uplink shared channel CG PUSCH type 1; or

a configured grant physical uplink shared channel CG PUSCH type 2.

18. A communication device, comprising:

a processing module configured to scramble multiple codewords by employing different scrambling sequences, wherein the multiple codewords correspond to multiple physical uplink shared channels PUSCHs;

wherein the multiple PUSCHs are associated with different antenna panels and/or transmission reception points TRPs respectively, and are scheduled by multiple downlink control information MDCI respectively, supporting simultaneous transmission of multiple panels based on MDCI.

19. A communication device, comprising:

a communication module configured to receive multiple physical uplink shared channels PUSCHs, wherein the multiple PUSCHs correspond to multiple codewords, and the multiple codewords are scrambled by employing different scrambling sequences;

the multiple PUSCHs are associated with different antenna panels and/or transmission reception points TRPs respectively, and are scheduled by multiple downlink control information MDCI respectively, supporting simultaneous transmission of multiple panels based on MDCI.

20. A communication device, comprising:

a processor;

a memory for storing processor-executable instructions;

wherein the processor is configured to perform the method according to any one of claims 1 to 9.

21. A communication device, comprising:

a processor;

a memory for storing processor-executable instructions;

wherein the processor is configured to perform the method according to any one of claims 10 to 17.

22. A storage medium, wherein instructions are stored in the storage medium, and when the instructions in the storage medium are executed by a processor of a terminal, the terminal is enabled to perform the method according to any one of claims 1 to 9.

23. A storage medium, wherein instructions are stored in the storage medium, and when the instructions in the storage medium are executed by a processor of a network device, the network device is enabled to perform the method according to any one of claims 10 to 17.

FIG. 1

FIG. 2

FIG. 3

S11

Scrambling multiple codewords corresponding to multiple physical uplink shared channels (PUSCHs) by employing different scrambling sequences

FIG. 4

S21

Scrambling multiple codewords by employing different pseudo-random sequences

FIG. 5

S31

Receiving a first identification configuration parameter sent by a network device

S32

Determining identification information based on the first identification configuration parameter

S33

Scrambling multiple codewords corresponding to multiple physical uplink shared channels (PUSCHs) by employing different scrambling sequences

FIG. 6

S41

Receiving a second identification configuration parameter and offset information sent by a network device

S42

Configuring first identification information based on the second identification configuration parameter, and determining second identification information based on the offset information and the first identification information

S43

Scrambling multiple codewords corresponding to multiple physical uplink shared channels (PUSCHs) by employing different scrambling sequences

FIG. 7

Receiving multiple physical uplink shared channels (PUSCHs) | S51

FIG. 8

Sending a first identification configuration parameter | S61

Receiving multiple physical uplink shared channels (PUSCHs) | S62

FIG. 9

Sending a second identification configuration parameter and offset information | S71

Receiving multiple physical uplink shared channels (PUSCHs) | S72

FIG. 10

100

| Processing module | — 110 |

| Communication module | — 120 |

FIG. 11

200

| Communication module | — 210 |

FIG. 12

FIG. 13

400

| | |
|---|---|
| 422 Processing component | Power component 426 |

| | |
|---|---|
| 432 Memory | Network interface 450 |
| | Input/output interface 458 |

FIG. 14

## INTERNATIONAL SEARCH REPORT

| International application No. |
|---|
| **PCT/CN2023/080949** |

**A.    CLASSIFICATION OF SUBJECT MATTER**

H04W72/12(2023.01)i

According to International Patent Classification (IPC) or to both national classification and IPC

**B.    FIELDS SEARCHED**

Minimum documentation searched (classification system followed by classification symbols)

IPC：H04W H04B H04Q

Documentation searched other than minimum documentation to the extent that such documents are included in the fields searched

Electronic data base consulted during the international search (name of data base and, where practicable, search terms used)

CNTXT, CNKI, ENTXTC, WPABS, VEN, ENTXT, 3GPP: 加扰, 码字, 物理上行共享信道, 板, 传输接收点, 发送接收点, 传送接收点, 多, 各, 不同, 两, 下行控制, 同时, 同步, scrambl+, code, PUSCH, panel, TRP, multi+, each, two, DCI

**C.    DOCUMENTS CONSIDERED TO BE RELEVANT**

| Category* | Citation of document, with indication, where appropriate, of the relevant passages | Relevant to claim No. |
|---|---|---|
| X | WO 2021184327 A1 (QUALCOMM INC.) 23 September 2021 (2021-09-23) claims 1-20, and description, paragraphs [0023]-[00100] | 1-23 |
| A | CN 112771785 A (LENOVO (SINGAPORE) PTE. LTD.) 07 May 2021 (2021-05-07) entire document | 1-23 |
| A | ZTE. "SRI/TPMI Enhancement for Enabling 8 TX UL Transmission" *3GPP TSG RAN WG1 Meeting #112, R1-2300187*, 17 February 2023 (2023-02-17), entire document | 1-23 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 June 2023** | **06 July 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/080949**

| Patent document cited in search report | | | Publication date (day/month/year) | Patent family member(s) | | | Publication date (day/month/year) |
|---|---|---|---|---|---|---|---|
| WO | 2021184327 | A1 | 23 September 2021 | WO | 2021185089 | A1 | 23 September 2021 |
| | | | | WO | 2021184296 | A1 | 23 September 2021 |
| CN | 112771785 | A | 07 May 2021 | US | 2020107353 | A1 | 02 April 2020 |
| | | | | US | 2021360682 | A1 | 18 November 2021 |
| | | | | EP | 3857716 | A1 | 04 August 2021 |
| | | | | WO | 2020065596 | A1 | 02 April 2020 |

Form PCT/ISA/210 (patent family annex) (July 2022)